# EUROPEAN PATENT APPLICATION

(11) **EP 4 531 302 A1**
(43) Date of publication of application: **02.04.2025**
(21) Application number: 24202781.1
(22) Date of filing: 26.09.2024
(51) Int. Cl.: H04B 7/185

(54) **SYSTEMS AND METHODS FOR SATELLITE BAND ALLOCATION**

(30) Priority: 26.09.2023 US 202363585267 P; 12.02.2024 US 202418439738
(71) Applicant: Apple Inc., Cupertino, CA 95014 (US)
(72) Inventor: LOFFE, Anatoliy, Cupertino, 95014 (US); SAYENKO, Alexander, Cupertino, 95014 (US); POPP, Daniel, Cupertino, 95014 (US)
(74) Representative: Black, Diego

(57) **Abstract**

Embodiments of the present disclosure are directed to allocating a satellite band (e.g., a satellite channel) with a New Radio (NR) channel and at least one Long-Term Evolution (LTE) channel to enable a user equipment to communicate using a satellite network. The satellite band may be configured to include the NR channel positioned (e.g., placed) such that the NR channel is shifted away from an edge of the satellite band (e.g., not disposed or located at the edge of the satellite band) and/or in the middle (e.g., center) of the satellite band with respect to frequency. Additionally, the satellite band may be configured to include the at least one LTE channel positioned at one or both of outer edges of the satellite band (rather than the middle). Further, the NR channel may be placed within a carrier center frequency range to reduce allowed additional maximum power reduction (A-MPR) values.

## Description

### CROSS-REFERENCE TO RELATED APPLICATIONS

This application claims priority to U.S. Provisional Application No. 63/585,267, filed September 26, 2023, entitled "Systems and Methods for Satellite Band Allocation," which is incorporated by reference herein in its entirety for all purposes.

### BACKGROUND

The present disclosure relates generally to wireless communication, and more specifically to using Long-Term Evolution (LTE) channels and/or New Radio (NR) channels satellite communication.

Wireless communication devices (e.g., user equipment) may transmit and receive wireless signals to and from a non-terrestrial satellite network (NTN). However, satellite frequency bands may be limited in number and/or size. Additionally, the satellite frequency bands may be located near other services, such as global navigation satellite system (GNSS) frequency bands, which may result in strict emission requirements on the satellite frequency bands.

### SUMMARY

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In one embodiment, a tangible, non-transitory computer-readable medium, including instructions that when executed by one or more processors, are configured to cause the one or more processors to receive a request to communicate via a satellite band, allocate a first portion of the satellite band to a first channel of a first cellular type, allocate a second portion of the satellite band to a second channel of a second cellular type, and transmit or receive first data via the first portion of the satellite band, transmit or receive second data via the second portion of the satellite band, or both.

In another embodiment, a method includes transmitting, via a transmitter of user equipment, a request to communicate via a satellite band, receiving, via a receiver of the user equipment, an indication of the satellite band, the satellite band comprising a first portion of a first cellular type and a second portion of a second cellular type, and transmitting or receiving first data via the first portion of the satellite band, transmitting or receiving second data via the second portion of the satellite band, or both.

In yet another embodiment, an electronic device includes a transmitter, a receiver, and processing circuitry coupled to the transmitter and the receiver, the processing circuitry configured to receive a request to communicate via a satellite band, send an indication of the satellite band, the satellite band comprising a first portion of a first cellular type and a second portion of a second cellular type, and send or receive first data via the first portion of the satellite band, send or receive second data via the second portion of the satellite band, or both.

Various refinements of the features noted above may exist in relation to various aspects of the present disclosure. Further features may also be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. The brief summary presented above is intended only to familiarize the reader with certain aspects and contexts of embodiments of the present disclosure without limitation to the claimed subject matter.

### BRIEF DESCRIPTION OF THE DRAWINGS

Various aspects of this disclosure may be better understood upon reading the following detailed description and upon reference to the drawings described below in which like numerals refer to like parts.
FIG. 1 is a block diagram of an electronic device, according to embodiments of the present disclosure;
FIG. 2 is a functional diagram of the electronic device of FIG. 1, according to embodiments of the present disclosure;
FIG. 3 is a schematic diagram of a communication system including the user equipment of FIG. 1 communicatively coupled to a non-terrestrial network supported by satellites, according to embodiments of the present disclosure;
FIG. 4 is a flowchart of a method to communicate on an allocated satellite band, according to embodiments of the present disclosure;
FIG. 5 is an example illustration of the allocated satellite band including a New Radio (NR) channel and a Long-Term Evolution Category M1 (LTE CatM) channel, according to embodiments of the present disclosure;
FIG. 6 is an example illustration of the allocated satellite band including the NR channel and two LTE CatM channels, according to embodiments of the present disclosure;
FIG. 7 is an example illustration of the allocated satellite band including the NR channel, the two LTE CatM channels, and two LTE Narrowband Internet of Things (LTE NB-IOT) channels, according to embodiments of the present disclosure;
FIG. 8 is an example illustration of the allocated satellite band including the NR channel, the LTE CatM channel, and four LTE NB-IOT channels, according to embodiments of the present disclosure;
FIG. 9 is an example illustration of the allocated satellite band including the NR channel and seven LTE NB-IOT channels, according to embodiments of the present disclosure;
FIG. 10 is an example illustration of the allocated satellite band including at least one high allowed additional maximum power reduction (A-MPR) region and a low A-MPR region; and
FIG. 11 is a flowchart of a method for transmitting or receiving a first stream of data via a first portion of the allocated satellite band and transmitting or receiving a second stream of data via a second portion of the allocated satellite band, according to embodiments of the present disclosure.

### DETAILED DESCRIPTION OF SPECIFIC EMBODIMENTS

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features. Furthermore, the particular features, structures, or characteristics may be combined in any suitable manner in one or more embodiments. Use of the terms "approximately," "near," "about," "close to," and/or "substantially" should be understood to mean including close to a target (e.g., design, value, amount), such as within a margin of any suitable or contemplatable error (e.g., within 0.1 % of a target, within 1% of a target, within 5% of a target, within 10% of a target, within 25% of a target, and so on). Moreover, it should be understood that any exact values, numbers, measurements, and so on, provided herein, are contemplated to include approximations (e.g., within a margin of suitable or contemplatable error) of the exact values, numbers, measurements, and so on. Additionally, the term "set" may include one or more. That is, a set may include a unitary set of one member, but the set may also include a set of multiple members.

This disclosure is directed to systems and methods for satellite band allocation of a non-terrestrial network (NTN). User equipment may transmit and receive wireless signals to and from the NTN. In particular, 3^{rd} Generation Partnership Project (3GPP) standards may define one or more frequency ranges and/or bands for communication with a satellite of the NTN. For example, the 3GPP may assign frequency bands (e.g., that are within 1.5-2.4 gigahertz (GHz)) to handheld or wireless communication devices (e.g., the user equipment). However, the satellite frequency bands may be limited in number, small in size, and/or misaligned (e.g., with respect to a 5 megahertz (MHz) or 1 MHz boundary). Thus, there may be a limited number of resources that enable the user equipment to exchange data with the NTN. Indeed, the NTN may attempt to use several cellular technologies or types, but there may not be enough bandwidth to allocate individual blocks. As such, it may be desired to allocate a satellite band of the NTN for communication with the user equipment using different types of channels (e.g., Long-Term Evolution (LTE) channels and New Radio (NR) channels) to improve uplink budget and resource utilization.

Additionally, a transmission power of the user equipment during uplink transmissions may be constrained by regulations (e.g., from regulatory bodies). In some cases, the transmission power may be determined based on a maximum power reduction (MPR) and allowed additional maximum power reduction (A-MPR) values (e.g., allowed power back-off values), which may aid in ensuring compliance with the regulations. The A-MPR values may account for an Adjacent Channel Leakage Ratio (ACLR) and an allowed maximum output power reduction (P-MPRc) to ensure compliance with applicable energy absorption requirements and addressing unwanted emissions. That is, the A-MPR values may be used to reduce the transmission power of the user equipment. Therefore, it may be desired to specify a carrier frequency range to identify placement for an NR channel within the satellite band (e.g., with respect to LTE channels within the satellite band) and decrease or minimize reduction in the transmission power by the A-MPR values.

Embodiments of the present disclosure are directed to allocating a satellite band (e.g., a satellite channel) with an NR channel and at least one LTE channel to enable a user equipment (e.g., a hand-held device) to communicate using a satellite network (e.g., the non-terrestrial network). The satellite band may be configured to enable a combination of various cellular technologies or types (e.g., the NR channel, one or more LTE channels) within the satellite band. For example, the satellite band may be configured to include the NR channel positioned (e.g., placed) such that the NR channel is shifted away from an edge of the satellite band (e.g., not disposed or located at the edge of the satellite band) and/or in the middle (e.g., center) of the satellite band with respect to frequency. Additionally, the satellite band may be configured to include the at least one LTE channel positioned at one or both of outer edges of the satellite band (rather than the middle). Due to a large maximum channel bandwidth of the NR channel, the position of the at least one LTE channel at one or both of the outer edges of the satellite band may enable the at least one LTE channel to lessen the impact of the greater emissions produced by the NR channel.

The at least one LTE channel may include an LTE Category M1 (LTE CatM) channel, an LTE Narrowband-Internet of Things (LTE NB-IOT) channel, or any other suitable LTE channel. Further, in some embodiments, dynamic spectrum sharing (DSS) operations may be implemented between the at least one LTE channel and the NR channel to enable sharing of a portion of spectrum resources (e.g., frequency resources) between the channels. Indeed, the at least one LTE channel and the NR channel may be multiplexed over the same spectrum resources. Further, alignment of one or more resource blocks of the at least one LTE channel and the one or more resource blocks of the NR channel may enable the DSS operations. The one or more resource blocks may each include a unit of allocation of time and/or frequency resources within the satellite band, which may enable communication with the user equipment (or any other suitable device). Accordingly, the placement of the at least one LTE channel and the NR channel within the satellite band may enable an improvement in spectrum resource utilization of the user equipment.

Further, as mentioned above, the NR channel may be positioned such that the NR channel is shifted away from the edge of the satellite band and/or in the middle of the satellite band. An offset (e.g., an amount shifted in multiples of step sizes) of the NR channel may enable reduction or minimization of the A-MPR values. Each of the carrier center frequency ranges may be associated with a respective set of A-MPR values. For example, a first set of A-MPR values may be associated with a first carrier frequency range and a second set of A-MPR values may be associated with a second carrier frequency range. The A-MPR values may be captured by identifying switching points between each of the carrier center frequency ranges where the A-MPR values may be applied and not applied. The switching points may be based on a channel size (e.g., the at least one LTE channel size, the NR channel size, and/or the resource block (RB) size) and/or emission regulations.

A carrier center frequency range may be aligned with the at least one LTE channel to offset the NR channel and reduce or minimize the A-MPR value. As an example, without offsetting the NR channel, the A-MPR value may be equal to 16 decibels. However, after offsetting the NR channel to align with the carrier frequency range, the A-MPR value may be equal to 3 decibels. That is, the first region of the carrier center frequency range and the second region of the carrier center frequency range may be aligned with the at least one LTE channel such that the NR channel placement within the carrier center frequency range may reduce or minimize the A-MPR values. Since the A-MPR value may be subtracted from transmission power of the user equipment, reduction or minimization of the A-MPR value may increase the transmission power of the user equipment. In this manner, the NR channel placement may improve utilization of the spectrum resources and increase a maximum possible transmission power.

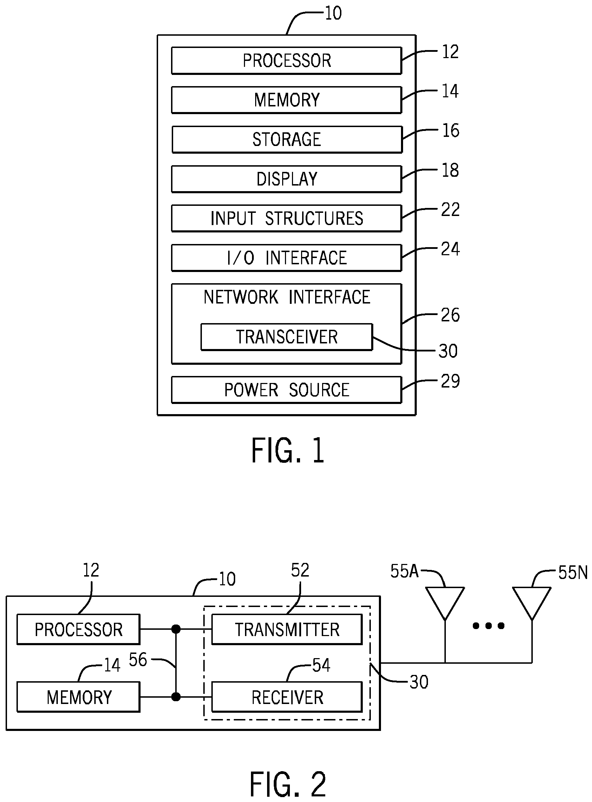

FIG. 1 is a block diagram of a user equipment 10, according to embodiments of the present disclosure. The user equipment 10 may include, among other things, one or more processors 12 (collectively referred to herein as a single processor for convenience, which may be implemented in any suitable form of processing circuitry), memory 14, nonvolatile storage 16, a display 18, input structures 22, an input/output (I/O) interface 24, a network interface 26, and a power source 29. The various functional blocks shown in FIG. 1 may include hardware elements (including circuitry), software elements (including machine-executable instructions) or a combination of both hardware and software elements (which may be referred to as logic). The processor 12, memory 14, the nonvolatile storage 16, the display 18, the input structures 22, the input/output (I/O) interface 24, the network interface 26, and/or the power source 29 may each be communicatively coupled directly or indirectly (e.g., through or via another component, a communication bus, a network) to one another to transmit and/or receive signals between one another. It should be noted that FIG. 1 is merely one example of a particular implementation and is intended to illustrate the types of components that may be present in the user equipment 10.

By way of example, the user equipment 10 may include any suitable computing device, including a desktop or notebook computer, a portable electronic or handheld electronic device such as a wireless electronic device or smartphone, a tablet, a wearable electronic device, and other similar devices. In additional or alternative embodiments, the user equipment 10 may include an access point, such as a base station, a router (e.g., a wireless or Wi-Fi router), a hub, a switch, and so on. It should be noted that the processor 12 and other related items in FIG. 1 may be embodied wholly or in part as software, hardware, or both. Furthermore, the processor 12 and other related items in FIG. 1 may be a single contained processing module or may be incorporated wholly or partially within any of the other elements within the user equipment 10. The processor 12 may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that may perform calculations or other manipulations of information. The processors 12 may include one or more application processors, one or more baseband processors, or both, and perform the various functions described herein.

In the user equipment 10 of FIG. 1, the processor 12 may be operably coupled with a memory 14 and a nonvolatile storage 16 to perform various algorithms. Such programs or instructions executed by the processor 12 may be stored in any suitable article of manufacture that includes one or more tangible, computer-readable media. The tangible, computer-readable media may include the memory 14 and/or the nonvolatile storage 16, individually or collectively, to store the instructions or routines. The memory 14 and the nonvolatile storage 16 may include any suitable articles of manufacture for storing data and executable instructions, such as random-access memory, read-only memory, rewritable flash memory, hard drives, and optical discs. In addition, programs (e.g., an operating system) encoded on such a computer program product may also include instructions that may be executed by the processor 12 to enable the user equipment 10 to provide various functionalities.

In certain embodiments, the display 18 may facilitate users to view images generated on the user equipment 10. In some embodiments, the display 18 may include a touch screen, which may facilitate user interaction with a user interface of the user equipment 10. Furthermore, it should be appreciated that, in some embodiments, the display 18 may include one or more liquid crystal displays (LCDs), light-emitting diode (LED) displays, organic light-emitting diode (OLED) displays, active-matrix organic light-emitting diode (AMOLED) displays, or some combination of these and/or other display technologies.

The input structures 22 of the user equipment 10 may enable a user to interact with the user equipment 10 (e.g., pressing a button to increase or decrease a volume level). The I/O interface 24 may enable user equipment 10 to interface with various other electronic devices, as may the network interface 26. In some embodiments, the I/O interface 24 may include an I/O port for a hardwired connection for charging and/or content manipulation using a standard connector and protocol, such as the Lightning connector, a universal serial bus (USB), or other similar connector and protocol. The network interface 26 may include, for example, one or more interfaces for a personal area network (PAN), such as an ultra-wideband (UWB) or a BLUETOOTH^{®} network, a local area network (LAN) or wireless local area network (WLAN), such as a network employing one of the IEEE 802.11x family of protocols (e.g., WI-FI^{®}), and/or a wide area network (WAN), such as any standards related to the Third Generation Partnership Project (3GPP), including, for example, a 3^{rd} generation (3G) cellular network, universal mobile telecommunication system (UMTS), 4^{th} generation (4G) cellular network, Long Term Evolution ^{®} (LTE) cellular network, Long Term Evolution License Assisted Access (LTE-LAA) cellular network, 5^{th} generation (5G) cellular network, and/or New Radio (NR) cellular network, a 6^{th} generation (6G) or greater than 6G cellular network, a satellite network, a non-terrestrial network, and so on. In particular, the network interface 26 may include, for example, one or more interfaces for using a cellular communication standard of the 5G specifications that include the millimeter wave (mmWave) frequency range (e.g., 24.25-300 gigahertz (GHz)) that defines and/or enables frequency ranges used for wireless communication. The network interface 26 of the user equipment 10 may allow communication over the aforementioned networks (e.g., 5G, Wi-Fi, LTE-LAA, and so forth).

The network interface 26 may also include one or more interfaces for, for example, broadband fixed wireless access networks (e.g., WIMAX^{®}), mobile broadband Wireless networks (mobile WIMAX^{®}), asynchronous digital subscriber lines (e.g., ADSL, VDSL), digital video broadcasting-terrestrial (DVB-T^{®}) network and its extension DVB Handheld (DVB-H^{®}) network, ultra-wideband (UWB) network, alternating current (AC) power lines, and so forth.

As illustrated, the network interface 26 may include a transceiver 30. In some embodiments, all or portions of the transceiver 30 may be disposed within the processor 12. The transceiver 30 may support transmission and receipt of various wireless signals via one or more antennas, and thus may include a transmitter and a receiver. For example, the transceiver 30 may support communication using an allocated satellite band of a satellite network (e.g., a non-terrestrial network). That is, the transceiver 30 may support transmission and receipt of the various wireless signals via the allocated satellite band of the satellite network. The allocated satellite band may include a range of frequencies allocated for transmission and receipt of the various wireless signals. In some embodiments, the allocation (e.g., channel placement) of the allocated satellite band may be based on identification of a carrier frequency range. Therefore, the transceiver 30 may support transmission or receipt of first data via a first portion of the allocated satellite band and/or transmission or receipt of second data via a second portion of the allocated satellite band. In this manner, spectrum resource utilization of the user equipment 10 may be improved. Further, the power source 29 of the user equipment 10 may include any suitable source of power, such as a rechargeable lithium polymer (Li-poly) battery and/or an alternating current (AC) power converter.

FIG. 2 is a functional diagram of the user equipment 10 of FIG. 1, according to embodiments of the present disclosure. As illustrated, the processor 12, the memory 14, the transceiver 30, a transmitter 52, a receiver 54, and/or antennas 55 (illustrated as 55A-55N, collectively referred to as an antenna 55) may be communicatively coupled directly or indirectly (e.g., through or via another component, a communication bus, a network) to one another to transmit and/or receive signals between one another.

The user equipment 10 may include the transmitter 52 and/or the receiver 54 that respectively enable transmission and reception of signals between the user equipment 10 and an external device via, for example, a network (e.g., including base stations, access points, satellites, a satellite network, and so on) or a direct connection. For example, the transmitter 52 and/or the receiver 54 may support communication using the allocated satellite band of the satellite network. That is, the transmitter 52 may enable transmission of the first data via the first portion of the allocated satellite band and/or transmission of the second data via the second portion of the allocated satellite band. Moreover, the receiver 54 may enable receipt of the first data via the first portion of the allocated satellite band and/or receipt of the second data via the second portion of the allocated satellite band. As illustrated, the transmitter 52 and the receiver 54 may be combined into the transceiver 30. The user equipment 10 may also have one or more antennas 55A-55N electrically coupled to the transceiver 30. The antennas 55A-55N may be configured in an omnidirectional or directional configuration, in a single-beam, dual-beam, or multi-beam arrangement, and so on. Each antenna 55 may be associated with one or more beams and various configurations. In some embodiments, multiple antennas of the antennas 55A-55N of an antenna group or module may be communicatively coupled to a respective transceiver 30 and each emit radio frequency signals that may constructively and/or destructively combine to form a beam. The user equipment 10 may include multiple transmitters, multiple receivers, multiple transceivers, and/or multiple antennas as suitable for various communication standards. In some embodiments, the transmitter 52 and the receiver 54 may transmit and receive information via other wired or wireline systems or means.

As illustrated, the various components of the user equipment 10 may be coupled together by a bus system 56. The bus system 56 may include a data bus, for example, as well as a power bus, a control signal bus, and a status signal bus, in addition to the data bus. The components of the user equipment 10 may be coupled together or accept or provide inputs to each other using some other mechanism.

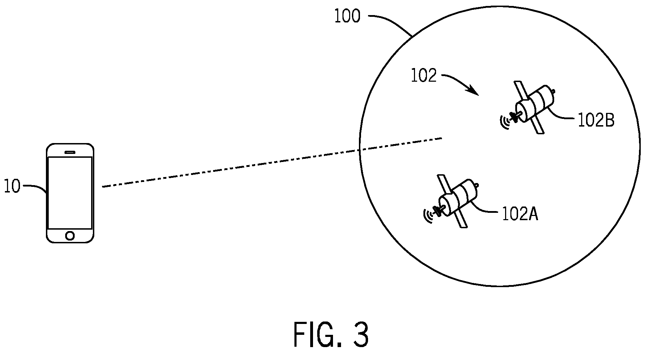

FIG. 3 is a schematic diagram of the user equipment 10 communicating (e.g., transmitting wireless signals, receiving wireless signals) with a non-terrestrial network (NTN) 100 supported by a first communication node 102A and a second communication node 102B, according to embodiments of the present disclosure. The NTN 100 may include a global navigation satellite system (GNSS) network, a non-terrestrial network, or any other suitable wireless communication network. Moreover, the NTN 100 is provided as an example, and in additional or alternative embodiments, the NTN 100 may instead be a terrestrial network, such as a radio access network (RAN), a WLAN, a PAN, and so on.

The NTN 100 may include multiple communication nodes 102 communicatively coupled together. The communication nodes 102 may include any suitable electronic device, such as non-terrestrial base stations, satellites, high-altitude platform stations, airborne base stations, space borne base stations, or any other suitable nonstationary or stationary communication devices, communicatively coupled to the user equipment 10. In additional or alternative embodiments, the communication node 102 may include base stations, such as Next Generation NodeB (gNodeB or gNB) base stations and may provide 5G/NR coverage to the user equipment 10, Evolved NodeB (eNodeB) base stations and may provide 4G/LTE coverage to the user equipment 10, and so on.

The user equipment 10 may communicate with the NTN 100 by transmitting a signal via the transmitter 52, which may be directed to at least one of the communication nodes 102 (e.g., using an uplink process). Each of the communication nodes 102 may include transceivers 30 to receive signals from the user equipment 10 and/or any other suitable device transmitting signals to the communication nodes 102. The communication nodes 102 may receive the signal, process the signal, and/or relay or transmit an additional signal back to the user equipment 10 and/or to an additional device (e.g., using a downlink process). For example, the user equipment 10 may receive the signal from the communication nodes 102 via the receiver 54. Upon receiving the signal, a receiving device (e.g., the user equipment 10, the additional device) may process the signal to obtain information associated with the signal.

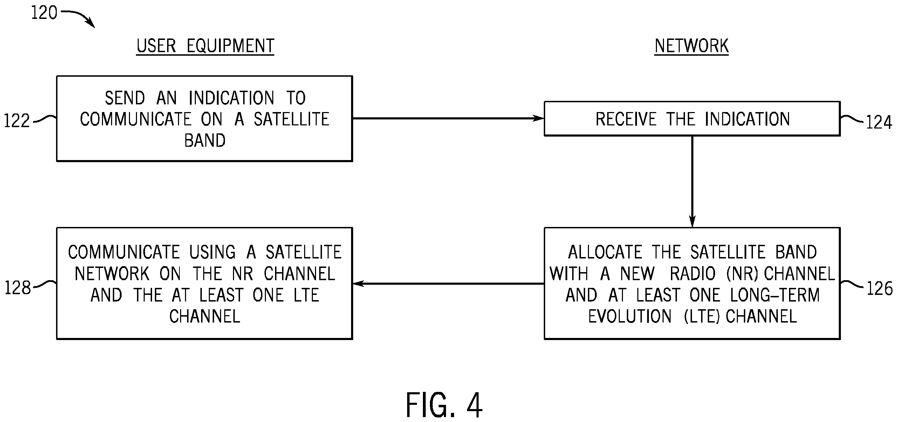

FIG. 4 is a flowchart of a method 120 for the user equipment 10 to communicate on an allocated satellite band, according to embodiments of the present disclosure. Any suitable device (e.g., a controller) that may control components of the user equipment 10, such as the processor 12, may perform the method 120. In some embodiments, the method 120 may be implemented by executing instructions stored in a tangible, non-transitory, computer-readable medium, such as the memory 14 or storage 16, using the processor 12. For example, the method 120 may be performed at least in part by one or more software components, such as an operating system of the user equipment 10, one or more software applications of the user equipment 10, and the like. While the method 120 is described using steps in a specific sequence, it should be understood that the present disclosure contemplates that the described steps may be performed in different sequences than the sequence illustrated, and certain described steps may be skipped or not performed altogether.

In process block 122, the user equipment 10 sends (e.g., transmits), via the transmitter 52, an indication to communicate on a satellite band (e.g., a satellite channel) of the NTN 100. The satellite band may include a range of frequencies allocated for transmission and reception of signals between the user equipment 10 and the NTN 100. A total bandwidth of the satellite band may refer to a sum of frequencies available for communication. For example, the total bandwidth of the satellite band may be 16.5 MHz. The satellite band may leverage various cellular technologies such as the NR channel, the LTE CatM channel, the LTE NB-IOT channel, or any other suitable channel that falls within the satellite band.

In process block 124, the NTN 100 receives the indication and, in process block 126, the NTN 100 allocates the satellite band with the NR channel and at least one LTE channel. The NTN 100 may allocate the satellite band such that the NR channel is shifted away from the edge of the satellite band and/or in the middle of the satellite band and the at least one LTE channel is positioned at one or both of the outer edges of the satellite band. In some embodiments, the one or both of the outer edges of the satellite band may include a guard band, such that the NR channel is also not disposed at the guard band, but the at least one LTE channel may be disposed at the guard band. Each of the NR channel and the at least one LTE channel may be a particular frequency within the satellite band. For example, the NR channel may be 5 MHz, 10 MHz, or 15 MHz. Additionally, the LTE CatM channel may be 1.4 MHz, and the NB-IOT channel may be .2 MHz. The allocation of the satellite band may enable the user equipment 10 to communicate (e.g., exchange signals) with the NTN 100.

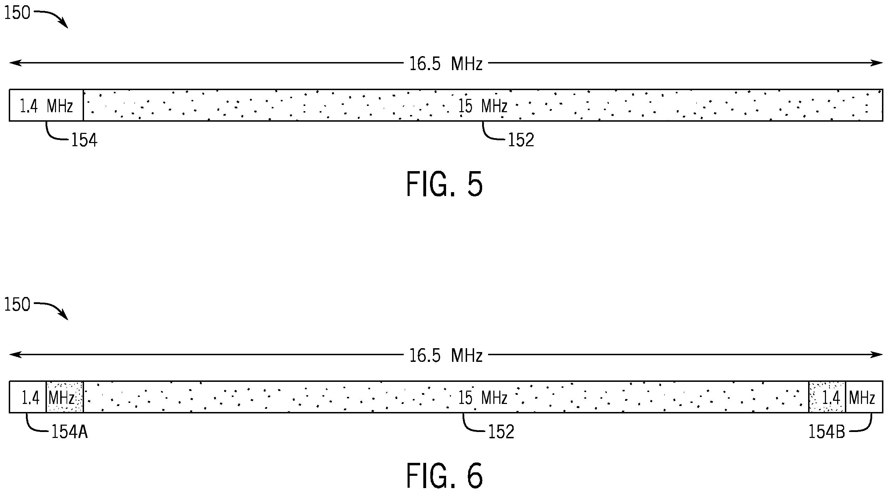

In process block 128, the user equipment 10 communicates, via the processor 12, using the NTN 100 on the NR channel and the at least one LTE channel. That is, the user equipment 10 may exchange data with the NTN 100. In some embodiments, the user equipment 10 may transmit or receive first data (e.g., a first data stream or first sequence of digitally encoded signals that conveys information) on the NR channel and at least second data (e.g., a second data stream or second sequence of digitally encoded signals that conveys information) on the at least one LTE channel. In this manner, the method 120 enables the user equipment 10 to more fully utilize an allocated satellite band. Additional details regarding the allocation of the satellite band will be discussed below with reference to FIGS. 5-9.

As mentioned above, the satellite band may be allocated with various cellular technologies. For example, the satellite band may include combinations of the NR channel, one or more LTE CatM channels, and/or one or more LTE NB-IOT channels. As will be discussed in further detail in FIGS. 5-9 below, the NR channel may be shifted away from the edge of the satellite band and/or to the middle of the satellite band using any number of the various cellular technologies (e.g., the at least one LTE channel) to reduce or minimize the impact of emissions produced by the NR channel and improve spectrum resource utilization.

With the foregoing in mind, FIG. 5 is an example illustration of an allocated satellite band 150 including an NR channel 152 and an LTE CatM channel 154, according to embodiments of the present disclosure. The total bandwidth of the allocated satellite band 150 may be 16.5 MHz. Thus, the NR channel 152 may be assigned a frequency value of 15 MHz and the LTE CatM channel 154 may be assigned the frequency value of 1.4 MHz. As illustrated, the LTE CatM channel 154 is positioned at a left edge (e.g., a lower edge) of the allocated satellite band 150 and the NR channel 152 is shifted to the right (away from the edge of the satellite band). In this manner, the LTE CatM channel 154 may reduce or minimize the impact of emissions produced by the NR channel.

FIG. 6 is an example illustration of the allocated satellite band 150 including the NR channel 152 and two LTE CatM channels (e.g., a first LTE CatM channel 154A and a second LTE CatM channel 154B), according to embodiments of the present disclosure. As illustrated, the NR channel 152 is positioned in the middle of the allocated satellite band 150. Additionally, the first LTE CatM channel 154A is placed on the left edge of the allocated satellite band 150 and the second LTE CatM channel 154B is placed on a right edge (e.g., an upper edge) of the allocated satellite band 150. The NR channel 152 may be assigned the frequency value of 15 MHz and the LTE CatM channel 154 may be assigned the frequency value of 1.4 MHz. A first portion of one or more resource blocks of the NR channel 152 and the first LTE CatM channel 154A may be aligned and a second portion of the one or more resource blocks of the NR channel 152 and the second LTE CatM channel 154B may be aligned to enable implementation of the DSS operations.

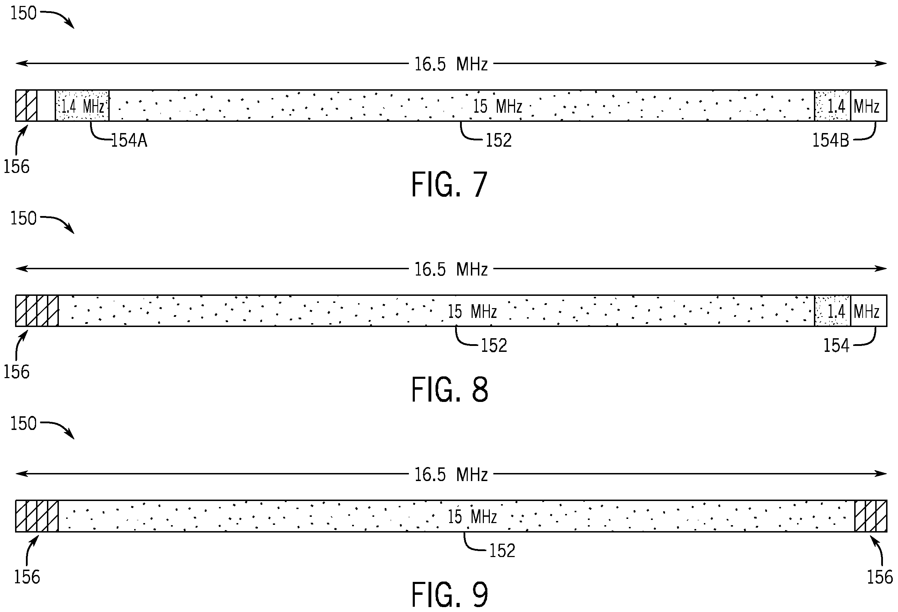

FIG. 7 is an example illustration of the allocated satellite band 150 including the NR channel, the two LTE CatM channels (e.g., the first LTE CatM channel 154A and the second LTE CatM channel 154B), and two LTE NB-IOT channels 156. As illustrated, the two LTE NB-IOT channels 156 may be positioned on the left edge of the allocated satellite band 150. Moreover, the first LTE CatM channel 154A may be positioned in between the two LTE NB-IOT channels 156 and the NR channel 152. Additionally, the second LTE CatM channel 154B may be positioned on the right edge of the allocated satellite band. The NR channel 152 may be assigned the frequency value of 15 MHz, the LTE CatM channel 154 may be assigned the frequency value of 1.4 MHz, and the two LTE NB-IOT channels 156 may each be assigned the frequency value of .2 MHz. Further, the first portion of one or more resource blocks of the NR channel 152 and the first LTE CatM channel 154A may be aligned and the second portion of the one or more resource blocks of the NR channel 152 and the second LTE CatM channel 154B may be aligned to enable implementation (e.g., execution) of the DSS operations.

FIG. 8 is an example illustration of the allocated satellite band 150 including the NR channel 152, the LTE CatM channel 154, and four LTE NB-IOT channels 156. As illustrated, the four LTE NB-IOT channels 156 may be positioned on the left edge of the allocated satellite band 150, the LTE CatM channel 154 may be positioned on the right edge of the allocated satellite band 150, and the NR channel 152 may be placed in the middle of the allocated satellite band 150. The NR channel 152 may be assigned the frequency value of 15 MHz, the LTE CatM channel 154 may be assigned the frequency value of 1.4 MHz, and the four LTE NB-IOT channels 156 may each be assigned the frequency value of .2 MHz. A portion of the one or more resource blocks of the NR channel 152 and the LTE CatM channel 154 may be aligned at the right edge to enable the implementation of the DSS operations.

FIG. 9 is an example illustration of the allocated satellite band 150 including the NR channel and seven LTE NB-IOT channels 156. Four of the seven LTE NB-IOT channels 156 may be positioned on the left edge of the allocated satellite band 150. Additionally, three of the seven LTE NB-IOT channels 156 may be positioned on the right edge. The NR channel 152 may be assigned the frequency value of 15 MHz, the seven LTE NB-IOT channels 156 may each be assigned the frequency value of .2 MHz.

It should be noted that allocation of the satellite band is not limited to the examples described above with respect to FIGS. 5-9. That is, any suitable number of LTE channels may be included in the allocated satellite band 150. Moreover, the NR channel may be assigned any suitable frequency value. For example, the NR channel 152 may be assigned the frequency value of 5 MHz or 10 MHz. Thus, as an example, if the NR channel is 10 MHz, the allocated satellite band 150 may include five LTE CatM channels 154 (each assigned the frequency value of 1.4 MHz). Further, it should be noted that some or all of one or more resource blocks of each of the NR channel 152, the LTE CatM channel 154, and the LTE NB-IOT channel 156 may be aligned and thus may enable the implementation of the DSS operations. That is, at least a portion of a respective one or more resource blocks of any two of the three channels, or in all three channels, may be aligned with each other.

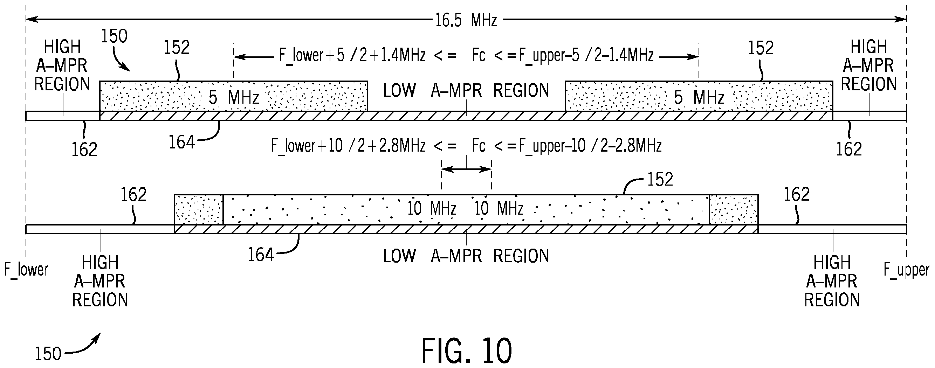

In some embodiments, the placement of the NR channel 152 may be determined based on identification of at least one carrier frequency range where A-MPR values are high and a carrier frequency range where the A-MPR values are low. FIG. 10 is an example illustration of the allocated satellite band 150 including at least one high A-MPR region 162 and a low A-MPR region 164. The NR channel 152 may be placed within a region where the A-MPR values are low (e.g., the low A-MPR region 164). The carrier frequency range may be configured such that it is aligned with the one or more LTE channels. A low value of the carrier frequency range may be determined by summing a frequency of a lower edge of the satellite band, a bandwidth of the satellite band divided by two, and an offset (a number of steps multiplied by a step size) of the NR channel 152. The step size may include, but is not limited to, an LTE/NR channel raster (e.g., 100 kHz), a resource block size (e.g., 180 kHz), an LTE NB-IOT channel size (e.g., 200 kHz), or an LTE Machine type channel size (e.g., 1400kHz). A high value of the carrier frequency range may be determined by an upper edge of the band minus the bandwidth divided by two minus the offset. Accordingly, placing the NR channel 152 within the carrier frequency range may reduce or minimize the A-MPR values.

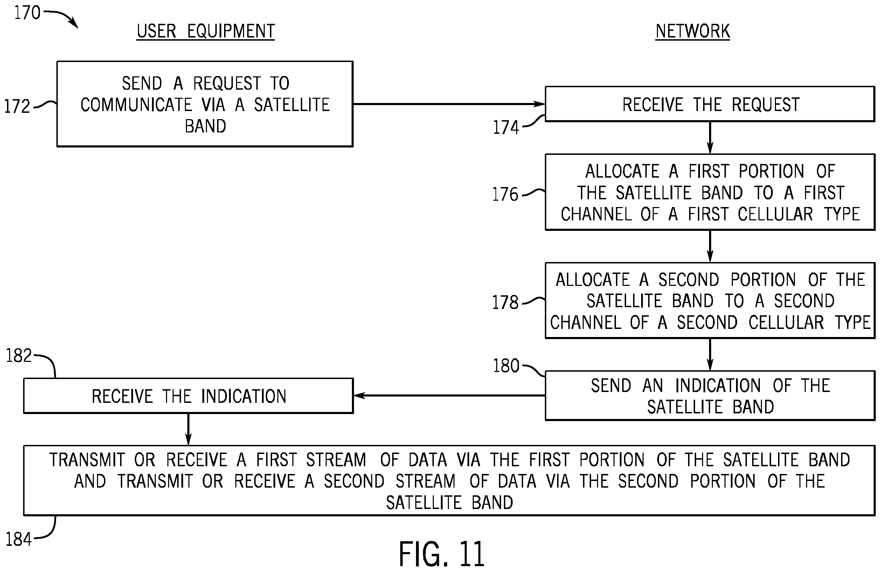

With the foregoing in mind, FIG. 11 is a flowchart of a method 170 for transmitting or receiving a first stream of data via a first portion of the allocated satellite band 150 and transmitting or receiving a second stream of data via a second portion of the allocated satellite band 150, according to embodiments of the present disclosure. Any suitable device (e.g., a controller) that may control components of the user equipment 10, such as the processor 12, may perform the method 170. In some embodiments, the method 170 may be implemented by executing instructions stored in a tangible, non-transitory, computer-readable medium, such as the memory 14 or storage 16, using the processor 12. For example, the method 170 may be performed at least in part by one or more software components, such as an operating system of the user equipment 10, one or more software applications of the user equipment 10, and the like. While the method 170 is described using steps in a specific sequence, it should be understood that the present disclosure contemplates that the described steps may be performed in different sequences than the sequence illustrated, and certain described steps may be skipped or not performed altogether.

In process block 172, the user equipment 10 sends, via the transmitter 52, a request to communicate via a satellite band of the NTN 100. As described herein, the satellite band may leverage various cellular technologies (e.g., cellular types). In process block 174, the NTN 100 receives the request and, in process block 176, allocates a first portion of the satellite band to a first channel of a first cellular type. For example, the first portion of the satellite band may be shifted away from the edge of the satellite band (e.g., not disposed or located at the edge of the satellite band). Additionally, the first cellular type may be a NR cellular type. Thus, the NTN 100 may allocate the first portion of the satellite band to the NR channel 152.

In process block 178, the NTN 100 allocates a second portion of the satellite band to a second channel of a second cellular type. For example, the second portion of the satellite band may be disposed at the edge of the satellite band (e.g., the left edge or the right edge). Further, the second cellular type may be different than (e.g., not the same as) the first cellular type. For example, the second cellular type may be an LTE cellular type. The LTE cellular type may include LTE CatM or LTE NB-1OT. Therefore, the NTN 100 may allocate the second portion to the LTE CatM channel 154 or the LTE NB-IOT channel 156. In some embodiments, a first edge of the second portion may be disposed at the edge of the satellite band and a second edge of the second portion may be disposed at an edge of the first portion.

Additionally, it should be noted that although the NTN 100 is described as allocating the first portion and the second portion above, the NTN 100 may allocate any suitable number of portions of the satellite band to multiple channels of multiple cellular types. For example, the NTN 100 may allocate a third portion of the satellite band to a third channel of the second cellular type and a fourth portion of the satellite band to a fourth channel of the second cellular type. Thus, in some embodiments, a first edge of the second portion may be disposed at the edge of the satellite band, a second edge of the second portion may be disposed at a first edge of one or more additional portions, and a second edge of the one or more additional portions is disposed at the edge of the first portion (e.g., when multiple LTE channels are positioned at the edge of the satellite band). In other embodiments, the first edge of the first portion is disposed at the first edge of the second portion, the second edge of the second portion is disposed at a first edge of the third portion. Further, the third portion may have a second edge disposed at the edge of the satellite band or the edge of the one or more additional portions.

In process block 180, the NTN 100 sends an indication of the allocated satellite band 150 to the user equipment 10. In process block 182, the user equipment 10 receives the indication. In process block 184, the user equipment 10 and/or the NTN 100 transmits or receives a first stream of data via the first portion of the allocated satellite band 150 and transmits or receives a second stream of data via the second portion of the allocated satellite band 150. The first stream of data and/or the second stream of data may respectively include communication data (e.g., voice data to enable voice communication, audio signals), internet data (e.g., to provide internet access, Internet Protocol (IP) based data), location data (e.g., enables determination of the location of the user equipment 10), emergency data (e.g., emergency signals, distress signals and location information), and/or any other suitable type of data that may be transmitted or received by the user equipment 10. It should be noted that the user equipment 10 and/or the NTN 100 may transmit or receive the first stream of data and transmit or receive the second stream of data either simultaneously or concurrently (during a same time period) or at different times (during different time periods). In this manner, the method 170 enables the user equipment 10 to more fully utilize the allocated satellite band 150.

The specific embodiments described above have been shown by way of example, and it should be understood that these embodiments may be susceptible to various modifications and alternative forms. It should be further understood that the claims are not intended to be limited to the particular forms disclosed, but rather to cover all modifications, equivalents, and alternatives falling within the spirit and scope of this disclosure.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...," it is intended that such elements are to be interpreted under 35 U.S.C. 112(f). However, for any claims containing elements designated in any other manner, it is intended that such elements are not to be interpreted under 35 U.S.C. 112(f).

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

### NUMBERED STATEMENTS OF INVENTION

1. A tangible, non-transitory computer-readable medium, comprising instructions that, when executed by one or more processors, are configured to cause the one or more processors to:
   receive a request to communicate via a satellite band;
   allocate a first portion of the satellite band to a first channel of a first cellular type;
   allocate a second portion of the satellite band to a second channel of a second cellular type; and
   transmit or receive first data via the first portion of the satellite band, transmit or receive second data via the second portion of the satellite band, or both.
2. The tangible, non-transitory computer-readable medium of statement 1, wherein the first channel is shifted away from an edge of the satellite band.
3. The tangible, non-transitory computer-readable medium of statement 2, wherein the first cellular type is New Radio.
4. The tangible, non-transitory computer-readable medium of statement 1, wherein the second channel is disposed at an edge of the satellite band.
5. The tangible, non-transitory computer-readable medium of statement 4, wherein the second cellular type comprises Long-Term Evolution (LTE).
6. The tangible, non-transitory computer-readable medium of statement 5, wherein the second cellular type comprises LTE Category M1 or LTE Narrowband Internet of Things.
7. The tangible, non-transitory computer-readable medium of statement 1, wherein the instructions are configured to cause the one or more processors to align a first set of resource blocks of the first channel and a second set of resource blocks of the second channel.
8. The tangible, non-transitory computer-readable medium of statement 7, wherein the instructions are configured to cause the one or more processors to execute dynamic spectrum sharing (DSS) operations between the first channel and the second channel based on the alignment.
9. The tangible, non-transitory computer-readable medium of statement 1, wherein the instructions are configured to cause the one or more processors to allocate the first channel based on a carrier center frequency range.
10. A method comprising:
   transmitting, via a transmitter of user equipment, a request to communicate via a satellite band;
   receiving, via a receiver of the user equipment, an indication of the satellite band, the satellite band comprising a first portion of a first cellular type and a second portion of a second cellular type; and
   transmitting or receiving first data via the first portion of the satellite band, transmitting or receiving second data via the second portion of the satellite band, or both.
11. The method of statement 10, wherein a first edge of the second portion is disposed at an edge of the satellite band, and a second edge of the second portion is disposed at an edge of the first portion.
12. The method of statement 10, wherein the first cellular type comprises New Radio and the second cellular type comprises Long-Term Evolution (LTE).
13. The method of statement 10, comprising transmitting or receiving the first data and transmitting or receiving the second data during a first time period.
14. The method of statement 10, comprising transmitting or receiving the first data during a first time period and transmitting or receiving the second data during a second time period.
15. An electronic device comprising:
   a transmitter;
   a receiver; and
   processing circuitry coupled to the transmitter and the receiver, the processing circuitry configured to
      receive a request to communicate via a satellite band,
      send an indication of the satellite band, the satellite band comprising a first portion of a first cellular type and a second portion of a second cellular type, and
      send or receive first data via the first portion of the satellite band, send or receive second data via the second portion of the satellite band, or both.
16. The electronic device of statement 15, wherein the second portion is disposed at an edge of the satellite band and the first portion is not disposed at the edge of the satellite band.
17. The electronic device of statement 15, wherein the processing circuitry is configured to
   identify a first set of allowed additional maximum power reduction values based on a first switching point, and
   identify a second set of allowed additional maximum power reduction values based on a second switching point.
18. The electronic device of statement 17, wherein at least one of the first switching point and the second switching point are based on a channel size, emission regulations, or both.
19. The electronic device of statement 18, wherein the channel size is 180 kilohertz (kHz), 200 kHz, or 1400 kHz.
20. The electronic device of statement 17, wherein the first set of allowed additional maximum power reduction values is associated with a first carrier frequency range, and the second set of allowed additional maximum power reduction values is associated with a second carrier frequency range.

## Claims

1. A computer-readable medium, comprising instructions that, when executed by one or more processors, are configured to cause the one or more processors to:
receive a request to communicate via a satellite band;
allocate a first portion of the satellite band to a first channel of a first cellular type;
allocate a second portion of the satellite band to a second channel of a second cellular type; and
transmit or receive first data via the first portion of the satellite band, transmit or receive second data via the second portion of the satellite band, or both.

2. The computer-readable medium of claim 1, wherein the first channel is shifted away from an edge of the satellite band.

3. The computer-readable medium of claim 2, wherein the first cellular type is New Radio.

4. The computer-readable medium of claims 1-3, wherein the second channel is disposed at an edge of the satellite band.

5. The computer-readable medium of claim 4, wherein the second cellular type comprises Long-Term Evolution (LTE).

6. The computer-readable medium of claim 5, wherein the second cellular type comprises LTE Category M1 or LTE Narrowband Internet of Things.

7. The computer-readable medium of claims 1-6, wherein the instructions are configured to cause the one or more processors to execute dynamic spectrum sharing (DSS) operations between the first channel and the second channel based on an alignment between the channels.

8. A method comprising:
transmitting, via a transmitter of user equipment, a request to communicate via a satellite band;
receiving, via a receiver of the user equipment, an indication of the satellite band, the satellite band comprising a first portion of a first cellular type and a second portion of a second cellular type; and
transmitting or receiving first data via the first portion of the satellite band, transmitting or receiving second data via the second portion of the satellite band, or both.

9. The method of claim 8, wherein a first edge of the second portion is disposed at an edge of the satellite band, and a second edge of the second portion is disposed at an edge of the first portion.

10. The method of claims 8-9, wherein the first cellular type comprises New Radio and the second cellular type comprises Long-Term Evolution (LTE).

11. An electronic device comprising:
a transmitter;
a receiver; and
processing circuitry coupled to the transmitter and the receiver, the processing circuitry configured to
receive a request to communicate via a satellite band,
send an indication of the satellite band, the satellite band comprising a first portion of a first cellular type and a second portion of a second cellular type, and
send or receive first data via the first portion of the satellite band, send or receive second data via the second portion of the satellite band, or both.

12. The electronic device of claim 11, wherein the second portion is disposed at an edge of the satellite band and the first portion is not disposed at the edge of the satellite band.

13. The electronic device of claims 11-12, wherein the processing circuitry is configured to
identify a first set of allowed additional maximum power reduction values based on a first switching point, and
identify a second set of allowed additional maximum power reduction values based on a second switching point.

14. The electronic device of claim 13, wherein at least one of the first switching point and the second switching point are based on a channel size, emission regulations, or both.

15. The electronic device of claims 13-14, wherein the first set of allowed additional maximum power reduction values is associated with a first carrier frequency range, and the second set of allowed additional maximum power reduction values is associated with a second carrier frequency range.
